# EUROPEAN PATENT APPLICATION

(11) **EP 4 786 444 A1**
(43) Date of publication of application: **05.08.2026**
(21) Application number: 26155547.8
(22) Date of filing: 30.01.2026
(51) Int. Cl.: C04B 41/00, C04B 41/91, F01D 5/18, B23K 26/384, B23K 26/55, C04B 41/51, C04B 41/88, C04B 37/02

(54) **LASER ETCHED CERAMIC-CONTAINING MATERIALS**

(30) Priority: 30.01.2025 US 202519041671
(71) Applicant: RTX Corporation, Farmington, CT 06032 (US)
(72) Inventor: SMIDDY, Winston, South Windsor 06074 (US); MILLER, Andrew S., Marlborough 06447 (US); WILKINS, Peter, Manchester 06033 (US); LILES, Howard J., Newington 06111 (US); GAO, Cheng, South Glastonbury 06073 (US); WASSERMAN, David J., Hamden 06517 (US); GLADDING, Cale, Vista 92083 (US); WILLIAMS, Addison, Escondido 92027 (US)
(74) Representative: Dehns

(57) **Abstract**

A process of fabricating at least one channel (310a,b,c,d,e) in a ceramic-containing material (110) comprising providing at least one ceramic-containing material (110) having a first major surface (120), a second major surface (130) opposite the first major surface (120), at least one first side surface (140a,b), and at least one second side surface (150a,b) adjacent the at least one first side surface (140a,b); removing at least a portion of material from at least one of the first major surface (120) or the second major surface (130) of the at least one ceramic-containing material (110) and form one or more channels (310a,b,c,d,e) comprising at least one heat augmentation feature (315a,b,c); providing at least one metal cover plate (410); disposing the at least one metal cover plate (410) adjacent the at least one ceramic-containing material (110) and covering the one or more channels (310a,b,c,d,e) and the at least one heat augmentation feature (315a,b,c); and securing together the at least one ceramic-containing material (110) and the at least one metal cover plate (410).

## Description

### FIELD OF THE INVENTION

The subject matter disclosed herein relates to ceramic-containing materials and, in particular, to laser etched ceramic-containing materials.

### BACKGROUND OF THE INVENTION

Ceramic matrix composites (CMCs) exhibit excellent physical, chemical, and mechanical properties at high temperatures, making CMCs particularly desirable for producing hot section components of gas turbine engines. Cooling the CMC based components to maintain appropriate operating temperatures is important to the performance, durability, and function of the component. Detailed features such as cooling channels within the CMC based components are beneficial to the components' design and function. The cooling channels permit regulating the component's temperature as needed. However, creating such cooling channels can involve removing core material, which is a difficult process requiring precision and attention to detail.

Consequently, there is a need for fabricating cooling channels within ceramic-containing material based components.

### SUMMARY OF THE INVENTION

The present invention is directed, in a first aspect, to a process of fabricating at least one channel in a ceramic-containing material, comprising: providing at least one ceramic-containing material having a first major surface, a second major surface opposite the first major surface, at least one first side surface, and at least one second side surface adjacent the at least one first side surface; removing at least a portion of material from at least one of the first major surface or the second major surface of the at least one ceramic-containing material and forming one or more channels comprising at least one heat augmentation feature; providing at least one metal cover plate; disposing the at least one metal cover plate adjacent the at least one ceramic-containing material and covering the one or more channels and the at least one heat augmentation feature; and, securing together the at least one ceramic-containing material and the at least one metal cover plate.

In an embodiment of the above, the at least one ceramic-containing material comprises one or more of the following: a monolithic ceramic, a coated preform, a partially densified ceramic matrix composite, a ceramic matrix composite, and combinations thereof.

In an embodiment according to any of the previous embodiments, the one or more channels, at least one heat augmentation feature, or both the one or more channels and at least one heat augmentation feature extend at least a portion of a width from the at least one first side surface to the at least one second side surface of the at least one of the first major surface or the second major surface.

In an embodiment according to any of the previous embodiments, the one or more channels, at least one heat augmentation feature, or both the one or more channels and at least one heat augmentation feature extend at least a portion of a length from the at least one first side surface to the at least one second side surface of the at least one of the first major surface or the second major surface.

In an embodiment according to any of the previous embodiments, the one or more channels, at least one heat augmentation feature, or both the one or more channels and at least one heat augmentation feature comprise a cross-section having at least one of the following shapes: geometrical, non-geometrical, circular, non-circular, and combinations thereof.

In an embodiment according to any of the previous embodiments, the one or more channels, at least one heat augmentation feature, or both the one or more channels and at least one heat augmentation feature comprise at least one of the following: channel, cavity, and combinations thereof.

In an embodiment according to any of the previous embodiments, removing comprises using a laser.

In an embodiment according to any of the previous embodiments, using the laser comprises setting, operating and controlling one or more of the following parameters: time, power, duration, depth, and combinations thereof.

In an embodiment according to any of the previous embodiments, disposing comprises at least one of the following methods: mechanically, chemically, and combinations thereof.

In an embodiment according to any of the previous embodiments, securing comprises one or more of the following techniques: mechanical, bonding, and combinations thereof.

In another aspect, the present invention is directed to a ceramic-containing material fabricated according to a process comprising the steps of: providing at least one ceramic-containing material having a first major surface, a second major surface opposite the first major surface, at least one first side surface, and at least one second side surface adjacent the at least one first side surface; removing at least a portion of material from at least one of the first major surface or the second major surface of the at least one ceramic-containing material and forming one or more channels comprising at least one heat augmentation feature; providing at least one metal cover plate; disposing the at least one metal cover plate adjacent the at least one ceramic-containing material and covering the one or more heat augmentation features; and, securing together the at least one ceramic-containing material and the at least one metal cover plate.

In an embodiment of the above, the at least one ceramic-containing material comprises one or more of the following: a monolithic ceramic, a coated preform, a partially densified ceramic matrix composite, a ceramic matrix composite, and combinations thereof.

In an embodiment according to any of the previous embodiments, the one or more channels, at least one heat augmentation feature, or both the one or more channels and at least one heat augmentation feature extend at least a portion of a width from the at least one first side surface to the at least one second side surface of the at least one of the first major surface or the second major surface.

In an embodiment according to any of the previous embodiments, the one or more channels, at least one heat augmentation feature, or both the one or more channels and at least one heat augmentation feature extend at least a portion of a length from the at least one first side surface to the at least one second side surface of the at least one of the first major surface or the second major surface.

In an embodiment according to any of the previous embodiments, the one or more channels, at least one heat augmentation feature, or both the one or more channels and at least one heat augmentation feature comprise a cross-section having at least one of the following shapes: geometrical, non-geometrical, circular, non-circular, and combinations thereof.

In an embodiment according to any of the previous embodiments, the one or more channels, at least one heat augmentation feature, or both the one or more channels and at least one heat augmentation feature comprise at least one of the following: channel, cavity, and combinations thereof.

In an embodiment according to any of the previous embodiments, removing comprises using a laser.

In an embodiment according to any of the previous embodiments, using the laser comprises setting, operating and controlling one or more of the following parameters: time, power, duration, depth, and combinations thereof.

In an embodiment according to any of the previous embodiments, disposing comprises at least one of the following methods: mechanically, chemically, and combinations thereof.

In an embodiment according to any of the previous embodiments, securing comprises one or more of the following techniques: mechanical, bonding, and combinations thereof.

### BRIEF DESCRIPTION OF FIGURES

The features of the disclosure believed to be novel and the elements characteristic of the invention are set forth with particularity in the appended claims. The figures are for illustration purposes only and are not drawn to scale. The disclosure itself, however, both as to organization and method of operation, can best be understood by reference to the description of the preferred embodiment(s) which follows, taken in conjunction with the accompanying drawings in which:
FIG. 1 is an illustration of a ceramic-containing material, not drawn to scale.
FIG. 2 is an illustration of a laser focusing a laser beam onto the ceramic-containing material of FIG. 1.
FIG. 3 is an illustration of a heat augmentation feature laser machined onto the surface of the ceramic-containing material of FIG. 2.
FIG. 4 is an illustration of a metal cover plate, not drawn to scale, being disposed adjacent the heat augmentation feature of the ceramic-containing material.
FIG. 5 is an illustration of the metal cover plate adjacent the heat augmentation feature of the ceramic-containing material.
FIG. 6 is an illustration of metal cover plate bonded to the ceramic-containing material containing the heat augmentation feature.

### DETAILED DESCRIPTION OF THE INVENTION

The embodiments of the present disclosure can comprise, consist of, and consist essentially of the features and/or steps described herein, as well as any of the additional or optional ingredients, components, steps, or limitations described herein or would otherwise be appreciated by one of skill in the art. It is to be understood that all concentrations disclosed herein are by weight percent (wt. %.) based on a total weight of the composition unless otherwise indicated.

As used herein, a "coated substrate" or "coated preform" refers to an interface coated substrate or preform. As also used herein, a "partially densified CMC" refers to a coated substrate or preform that includes a layer, e.g., SiC layer, that facilitates rigidization of the coated substrate or preform. As also used further herein, a "ceramic matrix composite" or "CMC" refers to a matrix infiltrated into the coated substrate or coated preform or alternatively, a matrix infiltrated into the rigidized partially densified CMC.

The present disclosure is directed to an exemplary process for fabricating heat augmentation features of various detail and complexity that is also quick, accurate and reproducible. To accomplish these desired reproducible results, the exemplary process disclosed herein utilizes laser machining to remove material in the regions of a ceramic-containing material where heat augmentation features are needed. Detailed and controlled heat augmentation features of a desired shape(s) and/or dimension(s) with few manufacturing limits may be achieved. In addition, the ceramic-containing material may experience limited damage, residual or otherwise, by exposure to the laser machining removal. A metal cover plate then may be disposed adjacent the created heat augmentation features. The metal cover plate may also be modified by removing material and forming additional heat augmentation features. In at least one embodiment, a ceramic-containing material may include, but is not limited to, a monolithic ceramic, a coated preform, a partially densified ceramic matrix composite, a ceramic matrix composite; individually, and combinations thereof, and the like. In any one of the aforementioned embodiments, the combined ceramic-containing material and metal layer may then be utilized to fabricate a fully densified ceramic-containing material.

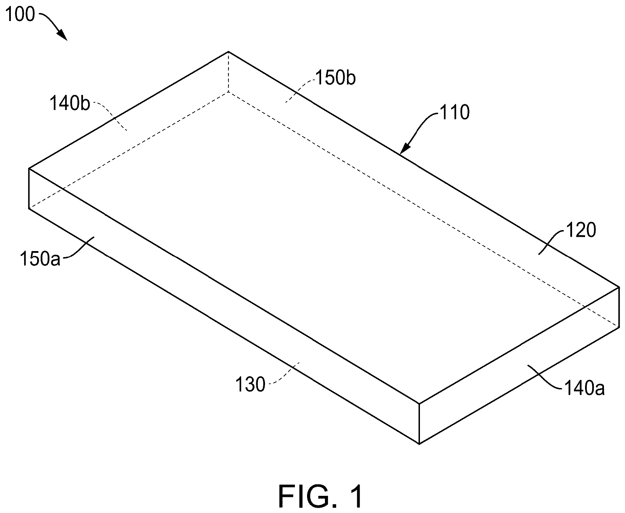

Referring now to an exemplary step 100 of FIG. 1, a ceramic-containing material 110 may be provided. The ceramic-containing material 110 may comprise any shape(s), dimension(s), and the like, without limitation. For example, in at least one embodiment, the ceramic-containing material 110 may have a first major surface 120, a second major surface 130 opposite the first major surface 120, at least one first side surface 140a,b, and at least one second side surface 150a,b adjacent the at least one first side surface 140a,b (see FIG. 1).

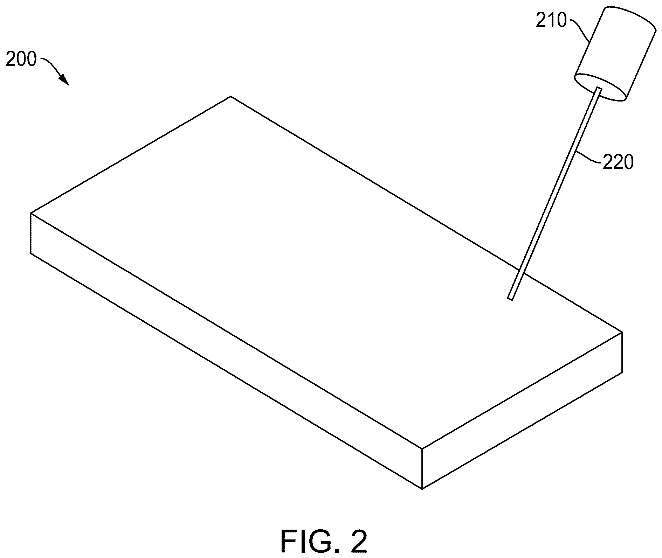

Referring now to an exemplary step 200 of FIG. 2, at least a portion of material from the first major surface 120, the second major surface 130 or both the first major surface 120 and the second major surface 130 may be etched and removed to form one or more heat augmentation features 315a,b,c in the ceramic-containing material 110. Etching may be accomplished using any number of known techniques. Suitable etching techniques may include, but are not limited to, laser machining, ultrasonic, electric discharge machining, electron beam removal; individually, and combinations thereof, and the like.

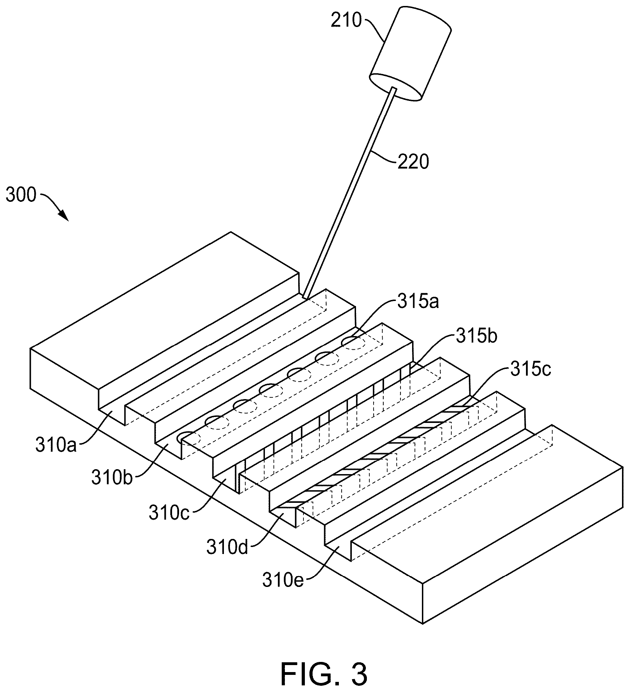

Referring now to an exemplary step 300 of FIG. 3, a laser 210 may focus a laser beam 220 on the first major surface 120 and/or the second major surface 130 and remove the material to form one or more channels 310a,b,c,d,e. The channels 310a,b,c,d,e may include one or more heat augmentation features 315a,b,c. In at least one embodiment, the channels 310a,b,c,d,e may extend at least a portion of a width from the side surface 140a to the opposing side surface 140b. In at least one other embodiment, the channels 310a,b,c,d,e may extend at least a portion of a length from the side surface 150a to the opposing side surface 150b. Keeping these embodiments in mind, the channels 310a,b,c,d,e and heat augmentation features 315a,b,c may combine to form a pattern. In at least one embodiment, the channels 310a,b,c,d,e and/or heat augmentation features 315a,b,c may comprise a cross-section having at least one of the following shape(s): geometrical, non-geometrical, circular, non-circular, combinations thereof, and the like. The channels 310a,b,c,d,e and/or heat augmentation features 315a,b,c may comprise any structure(s) having dimensions suitable for and capable of facilitating fluid flow therethrough or preventing fluid flow leakage. Facilitating fluid flow may accelerate lowering the temperature of and cooling the fluid flow before traveling to and through the second aperture. To achieve the desired heat augmentation features and dimensions, the laser may be set, operated and controlled at one or more of the following parameters: time, power, duration, depth, and combinations thereof. These parameters, solely or in combination, may assist achieving the heat augmentation features' desired overall complexity and requisite dimensional specificity.

In at least one embodiment, the heat augmentation features 315a,b,c may have any number of geometries, orientations and dimensions beyond those features illustrated in FIGS. 3-6. For example, potential heat augmentation features may include, but are not limited to, trip strips, e.g., chevron-shaped trip strips; pins, e.g., cylindrical pins; individually, and combinations thereof; and, the like. In at least one embodiment, the heat augmentation features may extend up to the entire height of the channel. For example, when cylindrical pins are utilized, the pins may extend the entire height of the channel such that no fluid flow may "leak" over the top of the pins.

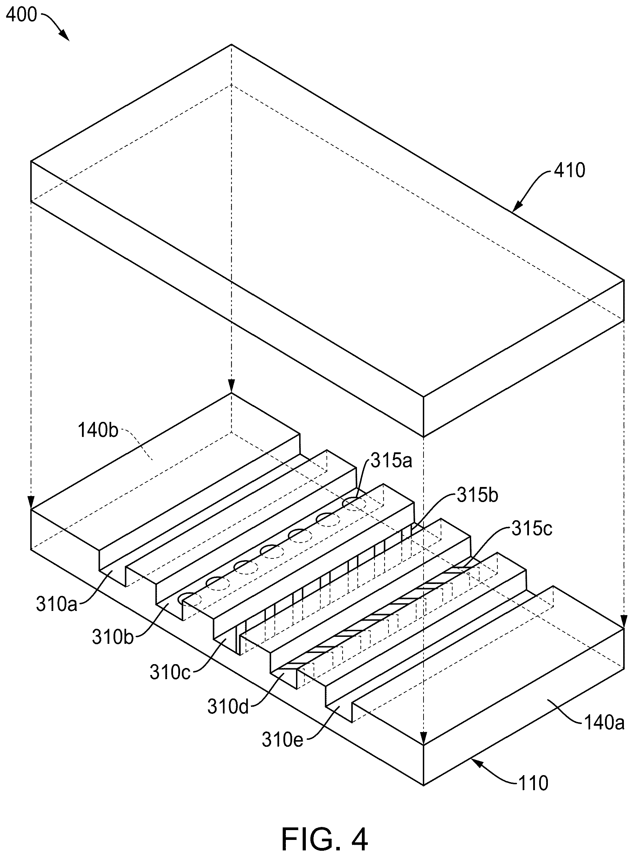

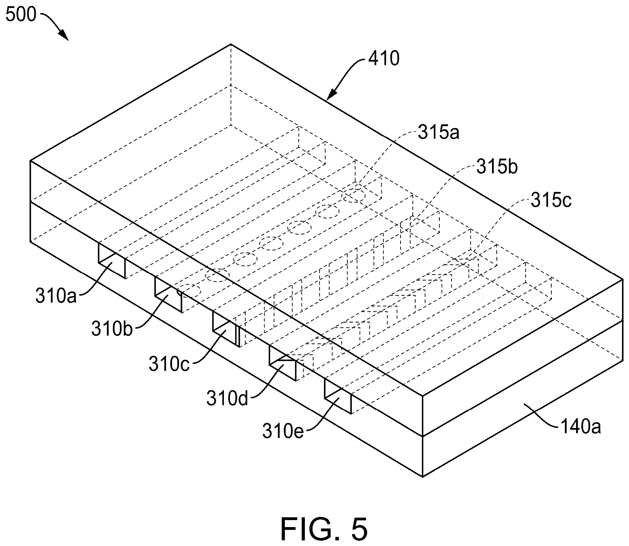

Referring now to exemplary steps 400 and 500 of FIGS. 4 and 5, a metal cover plate 410 may be provided and disposed adjacent either the first major surface 120 or the second major surface 130 of the ceramic-containing material 110. The metal cover plate may comprise any potential metal, e.g., non-reactive, for use in a gas turbine engine environment. In at least one embodiment, the disposed metal cover plate 410 may cover the channels 310a,b,c,d,e and heat augmentation features 315a,b,c. Disposal techniques may be any technique capable of attaching two different materials while maintaining the materials' heat augmentation integrity. Suitable disposal techniques may include, but are not limited to, mechanical, e.g., spring; chemical, e.g., glue, adhesive; individually, and combinations thereof; and, the like.

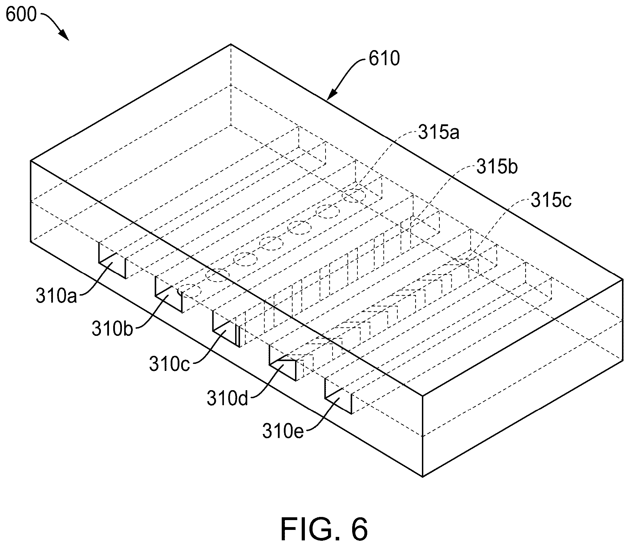

Referring now to an exemplary step 600 of FIG. 6, the combined metal cover plate 410 and ceramic-containing material 110 may be secured. Any securing technique capable of placing the materials adjacent each other, maintaining the materials' heat augmentation integrity, including the heat augmentation features formed therein, may be utilized. Suitable securing techniques may include, but are not limited to, mechanical, bonding; individually, and combinations thereof, and the like. In at least one embodiment, mechanical securing technique may include, but are not limited to, clamping, screwing, fastening, bolting; individually, and combinations thereof, and the like. The resultant combined metal cover plate-ceramic-containing material 610 may be further disposed within a sheet or layer of material, e.g., a ceramic fiber ply, and then included with additional combined metal cover plate-ceramic-containing material 610 also containing the channels 310a,b,c,d,e and heat augmentation features 315a,b,c.

While the present disclosure has been particularly described, in conjunction with specific preferred embodiments, it is evident that many alternatives, modifications and variations will be apparent to those skilled in the art in light of the foregoing description. It is therefore contemplated that the appended claims will embrace any such alternatives, modifications and variations as falling within the true scope of the present disclosure.

## Claims

1. A process of fabricating at least one channel (310a,b,c,d,e) in a ceramic-containing material (110), comprising:
providing at least one ceramic-containing material (110) having a first major surface (120), a second major surface (130) opposite the first major surface (120), at least one first side surface (140a,b), and at least one second side surface (150a,b) adjacent the at least one first side surface (140a,b);
removing at least a portion of material from at least one of the first major surface (120) and the second major surface (130) of the at least one ceramic-containing material (110) and forming one or more channels (310a-e) comprising at least one heat augmentation feature (315a,b,c);
providing at least one metal cover plate (410);
disposing the at least one metal cover plate (410) adjacent the at least one ceramic-containing material (110) and covering the one or more channels (310a-e) and the at least one heat augmentation feature (315a,b,c); and
securing together the at least one ceramic-containing material (110) and the at least one metal cover plate (410).

2. The process of claim 1, wherein the at least one ceramic-containing material (110) comprises one or more of the following: a monolithic ceramic, a coated preform, a partially densified ceramic matrix composite, a ceramic matrix composite, and combinations thereof.

3. The process of claim 1 or 2, wherein the one or more channels (310a-e), at least one heat augmentation feature (315a,b,c), or both the one or more channels (310a-e) and at least one heat augmentation feature (315a,b,c) extend at least a portion of a width from the at least one first side surface (140a,b) to the at least one second side surface (150a,b) of the at least one of the first major surface (120) and the second major surface (130).

4. The process of claim 1, 2 or 3, wherein the one or more channels (310a-e), at least one heat augmentation feature (315a,b,c), or both the one or more channels (310a-e) and at least one heat augmentation feature (315a,b,c) extend at least a portion of a length from the at least one first side surface (140a,b) to the at least one second side surface (150a,b) of the at least one of the first major surface (120) and the second major surface (130).

5. The process of any preceding claim, wherein the one or more channels (310a-e), at least one heat augmentation feature (315a,b,c), or both the one or more channels (310a-e) and at least one heat augmentation feature (315a,b,c) comprise a cross-section having at least one of the following shapes: geometrical, non-geometrical, circular, non-circular, and combinations thereof.

6. The process of any preceding claim, wherein the one or more channels (310a-e), at least one heat augmentation feature (315a,b,c), or both the one or more channels (310a-e) and at least one heat augmentation feature (315a,b,c) comprise at least one of the following: channel, cavity, and combinations thereof.

7. The process of any preceding claim, wherein removing comprises using a laser (210).

8. The process of claim 7, wherein using the laser (210) comprises setting, operating and controlling one or more of the following parameters: time, power, duration, depth, and combinations thereof.

9. The process of any preceding claim, wherein disposing comprises at least one of the following methods: mechanically, chemically, and combinations thereof.

10. The process of any preceding claim, wherein securing comprises one or more of the following techniques: mechanical, bonding, and combinations thereof.

11. A ceramic-containing material (110) fabricated according to a process comprising the steps of:
providing at least one ceramic-containing material (110) having a first major surface (120), a second major surface (130) opposite the first major surface (120), at least one first side surface (140a,b), and at least one second side surface (150a,b) adjacent the at least one first side surface (140a,b);
removing at least a portion of material from at least one of the first major surface (120) and the second major surface (130) of the at least one ceramic-containing material (110) and forming one or more channels (310a-e) comprising at least one heat augmentation feature;
providing at least one metal cover plate (410);
disposing the at least one metal cover plate (410) adjacent the at least one ceramic-containing material (110) and covering the one or more heat augmentation features (315a,b,c); and
securing together the at least one ceramic-containing material (110) and the at least one metal cover plate (410).

12. The ceramic-containing material (110) of claim 11, wherein the at least one ceramic-containing material (110) comprises one or more of the following: a monolithic ceramic, a coated preform, a partially densified ceramic matrix composite, a ceramic matrix composite, and combinations thereof.

13. The ceramic-containing material (110) of claim 11 or 12, wherein the one or more channels (310a-e), at least one heat augmentation feature (315a,b,c), or both the one or more channels (310a-e) and at least one heat augmentation feature (315a,b,c) extend at least a portion of a width from the at least one first side surface (140a,b) to the at least one second side surface (150a,b) of the at least one of the first major surface (120) and the second major surface (130), and/or
wherein the one or more channels (310a-e), at least one heat augmentation feature (315a,b,c), or both the one or more channels (310a-e) and at least one heat augmentation feature (315a,b,c) extend at least a portion of a length from the at least one first side surface (140a,b) to the at least one second side surface (150a,b) of the at least one of the first major surface (120) and the second major surface (130).

14. The ceramic-containing material (110) of claim 11, 12 or 13, wherein the one or more channels (310a-e), at least one heat augmentation feature (315a,b,c), or both the one or more channels (310a-e) and at least one heat augmentation feature comprise a cross-section having at least one of the following shapes: geometrical, non-geometrical, circular, non-circular, and combinations thereof, and/or
wherein the one or more channels (310a-e), at least one heat augmentation feature (315a,b,c), or both the one or more channels (310a-e) and at least one heat augmentation feature comprise at least one of the following: channel, cavity, and combinations thereof.

15. The ceramic-containing material (110) of any of claims 11 to 15, wherein removing comprises using a laser (210), and optionally using the laser (210) comprises setting, operating and controlling one or more of the following parameters: time, power, duration, depth, and combinations thereof, and/or
wherein disposing comprises at least one of the following methods: mechanically, chemically, and combinations thereof, and/or
wherein securing comprises one or more of the following techniques:
mechanical, bonding, and combinations thereof.
